(19) Europäisches Patentamt
European Patent Office
Office européen des brevets

(11) **EP 4 457 749 B1**

(12) **EUROPEAN PATENT SPECIFICATION**

(45) Date of publication and mention
of the grant of the patent:
**22.04.2026 Bulletin 2026/17**

(21) Application number: **22854435.9**

(22) Date of filing: **27.12.2022**

(51) International Patent Classification (IPC):
*G06T 5/00* (2024.01)        *H04N 5/33* (2023.01)
*H04N 9/31* (2006.01)        *H04N 25/61* (2023.01)

(52) Cooperative Patent Classification (CPC):
**H04N 5/33; G06T 5/90**

(86) International application number:
**PCT/US2022/054098**

(87) International publication number:
**WO 2023/129559 (06.07.2023 Gazette 2023/27)**

(54) **THERMAL IMAGE SHADING REDUCTION SYSTEMS AND METHODS**

SYSTEME UND VERFAHREN ZUR REDUZIERUNG DER SCHATTIERUNG THERMISCHER BILDER

SYSTÈMES ET PROCÉDÉS DE RÉDUCTION D'OMBRAGE D'IMAGE THERMIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **30.12.2021 US 202163295434 P**

(43) Date of publication of application:
**06.11.2024 Bulletin 2024/45**

(73) Proprietor: **Teledyne FLIR Commercial Systems, Inc.**
**Goleta, CA 93117 (US)**

(72) Inventors:
• **RAO, Umesh**
**Goleta, California 93117 (US)**

• **LIN, Stephanie**
**Goleta, California 93117 (US)**

(74) Representative: **Murgitroyd & Company**
**165-169 Scotland Street**
**Glasgow G5 8PL (GB)**

(56) References cited:
**EP-A2- 0 324 925      WO-A2-00/28730**

• **MARIOS VLACHOS ET AL: "Vein Segmentation in Infrared Images Using Compound Enhancing and Crisp Clustering", 12 May 2008, COMPUTER VISION SYSTEMS; [LECTURE NOTES IN COMPUTER SCIENCE], SPRINGER BERLIN HEIDELBERG, BERLIN, HEIDELBERG, PAGE(S) 393 - 402, ISBN: 978-3-540-79546-9, XP019088802**

EP 4 457 749 B1

## Description

TECHNICAL FIELD

The present invention relates generally to thermal imaging and, more particularly, to removing shading from thermal images.

BACKGROUND

Thermal imaging systems are used in a variety of applications to capture images of thermal wavelengths. For example, thermal imaging systems may be implemented as thermal cameras for use with vehicles such as cars, trucks, aerial vehicles, watercraft, and others.
However, captured thermal images may exhibit shading that hides details associated with objects of interest. For example, shading may appear in thermal images as additional thermal gradients that partially or entirely obscure objects of interest.
Shading may be caused by extreme temperatures, rain, snow, moisture, and/or other conditions. Shading may also be caused by various heat sources, such as heat emitting objects. Unfortunately, conventional approaches to shading removal are often computationally intensive and may not be readily implemented in thermal imaging systems, particularly in portable systems that may have limited processing resources.
WO 00/28730 discloses a system adapted for use with a focal plane array of electromagnetic energy detectors to receive first and second frames of image data from electromagnetic energy received from at least a portion of a scene. The first frame is a focused frame and the second frame is a blurred frame. In a feed-forward path the system compares the first frame to the second frame and provides an error signal in response thereto. In a main path, the system multiplies at least a portion of the second frame of image data with the error signal to provide a noise error corrected output signal. A wavelet filter is used to remove dome shading effects from the frames of image data. The wavelet filter is disposed in the main path and blurred and focused outputs therefrom are weighted, averaged and stored. Coefficients from the weighted, averaged and stored focused frames are compared to coefficients from the weighted, averaged and stored blurred frames to provide a fixed pattern noise error signal. A temporal noise error signal is identified from the weighted, averaged and stored focused frames. The fixed pattern noise error signal and the temporal noise error signals are sparse processed and shunted from a current frame.

SUMMARY

Various techniques are disclosed to reduce shading in thermal images and thereby provide more shades of gray back to objects of interest of in a scene. As a result, contrast can be increased. Additional techniques are provided to compress pixel values in a first range that are greater than or equal to an intermediate pixel value and expand pixel values in a second range that are less than the intermediate pixel value to derive a smooth form of the thermal image.
According to a first aspect of the present disclosure, there is provided a method according to claim 1.
According to a second aspect, there is provided a system according to claim 7 .
The scope of the present disclosure is defined by the claims, which are incorporated into this section by reference. A more complete understanding of embodiments of the present disclosure will be afforded to those skilled in the art, as well as a realization of additional advantages thereof, by a consideration of the following detailed description of one or more embodiments. Reference will be made to the appended sheets of drawings that will first be described briefly.

BRIEF DESCRIPTION OF THE DRAWINGS

FIG. 1 illustrates a block diagram of an imaging system in accordance with an embodiment of the disclosure.

Fig. 2 illustrates a flow diagram of a process to reduce shading in a thermal image in accordance with an embodiment of the disclosure.

Figs. 3A-3H illustrate the various changes to the original thermal image through the process described in Fig. 2 in accordance with embodiments of the disclosure.

Figs. 4A-4H illustrate another example of the various changes to the original thermal image through the process described in Fig. 2 in accordance with embodiments of the disclosure.

Embodiments of the present disclosure and their advantages are best understood by referring to the detailed description that follows. It is noted that sizes of various components and distances between these components are not drawn to scale in the figures. It should be appreciated that like reference numerals are used to identify like elements illustrated in one or more of the figures.

DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, it will be clear and apparent to those skilled in the art that the subject technology is not limited to the specific details set forth herein and may be practiced using one or more embodiments. In one or more instances, structures and components are shown in block diagram form in order to avoid obscuring the concepts of the subject technology.

In one or more embodiments, various systems and methods are provided. In some aspects, such systems and methods may be used for thermal imaging, such as thermal imaging. Such thermal imaging may be used for various applications, such as safety and vehicular (e.g., automotive) applications.

Conventional thennal imaging systems have drawbacks, such as identifying unwanted heat sources that obstruct the detail associated with an object of interest. In order to provide a thermal imaging system that addresses these issues, embodiments of the present invention accurately calculate and correct shading in a thermal image so that the detail of an object of interest is clearly identified. That is, shading reduction in thermal imagery takes out shades of gray from other more important portions of the scene. Most of this sort of shading, such as out of field irradiance from a window heater or the cooling of propellers from a drone, offer very little information for a user. Thus, various embodiments of the present invention reduce shading in a thermal imagery and thereby offers more shades of gray back to object(s) of interest of the scene content, bringing out more contrast in the portions of a scene that matter. Additionally, various embodiments of the present invention perform tone optimization (e.g., pixel value adjustment). The tone optimization adjusts down pixel values in a first range that are greater than or equal to an intermediate pixel value and adjust up pixel values in a second range that are less than the intermediate pixel value. The tone optimization is a simple and quick way to derive a smooth form of the thermal image.

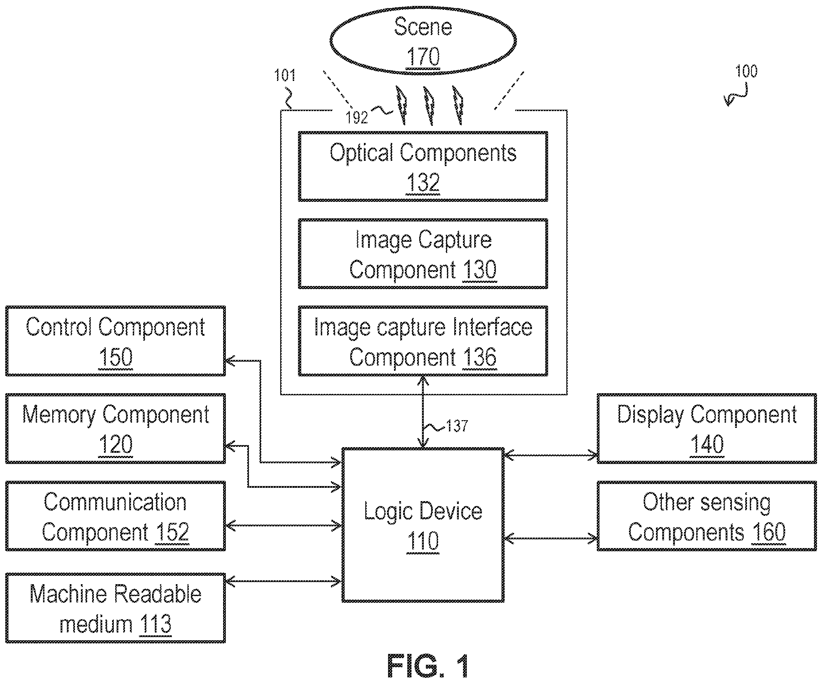

Turning now to the drawings, FIG. 1 illustrates a block diagram of an imaging system 100 in accordance with an embodiment of the disclosure. Imaging system 100 may be used to capture and process images (e.g., image frames) in accordance with techniques described herein. In some embodiments, various components of imaging system 100 may be provided in a camera component 101, such as an imaging camera. In other embodiments, one or more components of imaging system 100 may be implemented remotely from each other in a distributed fashion (e.g., networked or otherwise).

The imaging system 100 is used to detect one or more objects of interest within a scene 170. The imaging system 100 is configured to capture and process thermal images (e.g., thermal image frames) of scene 170 in response to thermal radiation (e.g., thermal radiation 192) received therefrom. Thermal radiation 192 corresponds to wavelengths that are emitted and/or absorbed by an object of interest within scene 170.

Captured images may be received by a logic device 110 and stored in a memory component 120. Logic device 110 may be configured to process the captured images in accordance with thermal detection techniques discussed herein.

In some embodiments, imaging system 100 includes logic device 110, a machine readable medium 113, a memory component 120, image capture component 130, optical components 132, an image capture interface component 136, a display component 140, a control component 150, a communication component 152, and other sensing components 160.

In some embodiments, imaging system 100 may be implemented as an imaging camera, such as camera component 101, to capture images, for example, of scene 170 (e.g., a field of view). In some embodiments, camera component 101 may include image capture component 130, optical components 132, and image capture interface component 136 housed in a protective enclosure. Imaging system 100 may represent any type of camera system which, for example, detects electromagnetic radiation (e.g., thermal radiation 192 received from scene 170) and provides representative data (e.g., one or more still images or video images). For example, imaging system 100 may represent a camera component 101 that is directed to detect thermal radiation and/or visible light and provide associated image data.

In some embodiments, imaging system 100 may include a portable device and may be implemented, for example, coupled to various types of vehicles (e.g., an automobile, a truck, or other land-based vehicles). Imaging system 100 may be implemented with camera component 101 at various types of fixed scenes (e.g., automobile roadway, train railway, or other scenes) via one or more types of structural mounts. In some embodiments, camera component 101 may be mounted in a stationary arrangement to capture repetitive thermal images of scene 170.

In some embodiments, logic device 110 may include, for example, a microprocessor, a single-core processor, a multi-core processor, a microcontroller, a programmable logic device configured to perform processing operations, a digital signal processing (DSP) device, one or more memories for storing executable instructions (e.g., software, firmware, or other instructions), and/or any other appropriate combinations of processing device and/or memory to execute instructions to perform any of the various operations described herein. Logic device 110 is configured to interface and communicate with the various components illustrated in FIG 1 to perform method and processing steps as described herein. In various embodiments, it should be appreciated that processing operations and/or instructions may be integrated in software and/or hardware as part of logic device 110, or code (e.g., software or configuration data) which may be stored in memory component 120. Embodiments of processing operations and/or instructions disclosed herein may be stored by machine readable medium 113 in a non-transitory manner (e.g., a memory, a hard drive, a compact disk, a digital video disk, or a flash memory) to be executed by a computer (e.g., logic or processor-based system) to perform various methods disclosed herein.

In various embodiments, the machine readable medium 113 may be included as part of imaging system 100 and/or separate from imaging system 100, with stored instructions provided to imaging system 100 by coupling the machine readable medium 113 to imaging system 100 and/or by imaging system 100 downloading (e.g., via a wired or wireless link) the instructions from the machine readable medium (e.g., containing the non-transitory information). In various embodiments, as described herein, instructions provide for real time applications of processing various images of scene 170.

In some embodiments, memory component 120 may include one or more memory devices (e.g., one or more memories) to store data and information. The one or more memory devices may include various types of memory including volatile and non-volatile memory devices, such as RAM (Random Access Memory), ROM (Read-Only Memory), EEPROM (Electrically-Erasable Read-Only Memory), flash memory, or other types of memory. In one embodiment, logic device 110 is configured to execute software stored in memory component 120 and/or machine readable medium 113 to perform various methods, processes, and operations in a manner as described herein.

In some embodiments, image capture component 130 may include an array of sensors (e.g., any type visible light, thermal, or other type of detector) for capturing images of scene 170. In one embodiment, the sensors of image capture component 130 provide for representing (e.g., converting) a captured images of scene 170 as digital data (e.g., via an analog-to-digital converter included as part of the sensor or separate from the sensor as part of imaging system 100). As further discussed herein, image capture component 130 may be implemented as an array of thermal sensors having at least two different types of filters distributed among the various sensors of the array.

In some embodiments, logic device 110 may be configured to receive images from image capture component 130, process the images, store the original and/or processed images in memory component 120, and/or retrieve stored images from memory component 120. In various aspects, logic device 110 may be remotely positioned, and logic device 110 may be configured to remotely receive images from image capture component 130 via wired or wireless communication with image capture interface component 136, as described herein. Logic device 110 may be configured to process images stored in memory component 120 to provide images (e.g., captured and/or processed images) to display component 140 for viewing by a user.

In some embodiments, display component 140 may include an image display device (e.g., a liquid crystal display (LCD)) or various other types of generally known video displays or monitors. Logic device 110 may be configured to display image data and information on display component 140. Logic device 110 may be configured to retrieve image data and information from memory component 120 and display any retrieved image data and information on display component 140. Display component 140 may include display electronics, which may be utilized by logic device 110 to display image data and information. Display component 140 may receive image data and information directly from image capture component 130 via logic device 110, or the image data and information may be transferred from memory component 120 via logic device 110.

In some embodiments, control component 150 may include a user input and/or interface device having one or more user actuated components, such as one or more push buttons, slide bars, rotatable knobs or a keyboard, that are configured to generate one or more user actuated input control signals. Control component 150 may be configured to be integrated as part of display component 140 to operate as both a user input device and a display device, such as, for example, a touch screen device configured to receive input signals from a user touching different parts of the display screen. Logic device 110 may be configured to sense control input signals from control component 150 and respond to any sensed control input signals received therefrom.

In some embodiments, control component 150 may include a control panel unit (e.g., a wired or wireless handheld control unit) having one or more user-activated mechanisms (e.g., buttons, knobs, sliders, or others) configured to interface with a user and receive user input control signals. In various embodiments, it should be appreciated that the control panel unit may be configured to include one or more other user-activated mechanisms to provide various other control operations of imaging system 100, such as auto-focus, menu enable and selection, field of view (FoV), brightness, contrast, gain, offset, spatial, temporal, and/or various other features and/or parameters.

In some embodiments, control component 150 may include a graphical user interface (GUI), which may be integrated as part of display component 140 (e.g., a user actuated touch screen), having one or more images of the user-activated mechanisms (e.g., buttons, knobs, sliders, or others), which are configured to interface with a user and receive user input control signals via the display component 140. As an example for one or more embodiments as discussed further herein, display component 140 and control component 150 may represent appropriate portions of a tablet, a laptop computer, a desktop computer, or other type of device.

In some embodiments, logic device 110 may be configured to communicate with image capture interface component 136 (e.g., by receiving data and information from image capture component 130). Image capture interface component 136 may be configured to receive images from image capture component 130 and communicate the images to logic device 110 directly or through one or more wired or wireless communication components (e.g., represented by connection 137) in the manner of communication component 152 further described herein. Camera component 101 and logic device 110 may be positioned proximate to or remote from each other in various embodiments.

In some embodiments, imaging system 100 may include one or more other types of sensing components 160, including environmental and/or operational sensors, depending on the sensed application or implementation, which provide information to logic device 110 (e.g., by receiving sensor information from each sensing component 160). In various embodiments, other sensing components 160 may be configured to provide data and information related to environmental conditions, such as internal and/or external temperature conditions, lighting conditions (e.g., day, night, dusk, and/or dawn), humidity levels, specific weather conditions (e.g., sun, rain, and/or snow), distance (e.g., laser rangefinder), rotation (e.g., a gyroscope), and/or whether a tunnel, a covered parking garage, or that some type of enclosure has been entered or exited. Accordingly, other sensing components 160 may include one or more conventional sensors as would be known by those skilled in the art for monitoring various conditions (e.g., environmental conditions) that may have an effect (e.g., on the image appearance) on the data provided by image capture component 130.

In some embodiments, other sensing components 160 may include devices that relay information to logic device 110 via wireless communication. For example, each sensing component 160 may be configured to receive information from a satellite, through a local broadcast (e.g., radio frequency) transmission, through a mobile or cellular network and/or through information beacons in an infrastructure (e.g., a transportation or highway information beacon infrastructure) or various other wired or wireless techniques.

In some embodiments, communication component 152 may be implemented as a network interface component (NIC) configured for communication with a network including other devices in the network. In various embodiments, communication component 152 may include one or more wired or wireless communication components, such as an Ethernet connection, a wireless local area network (WLAN) component based on the IEEE 802.11 standards, a wireless broadband component, mobile cellular component, a wireless satellite component, or various other types of wireless communication components including radio frequency (RF), microwave frequency (MWF), and/or thermal frequency (IRF) components configured for communication with a network. As such, communication component 152 may include an antenna coupled thereto for wireless communication purposes. In other embodiments, the communication component 152 may be configured to interface with a DSL (e.g., Digital Subscriber Line) modem, a PSTN (Public Switched Telephone Network) modem, an Ethernet device, and/or various other types of wired and/or wireless network communication devices configured for communication with a network.

In some embodiments, a network may be implemented as a single network or a combination of multiple networks. For example, in various embodiments, the network may include the Internet and/or one or more intranets, landline networks, wireless networks, and/or other appropriate types of communication networks. In another example, the network may include a wireless telecommunications network (e.g., cellular phone network) configured to communicate with other communication networks, such as the Internet. As such, in various embodiments, imaging system 100 and/or its individual associated components may be associated with a particular network link such as for example a URL (Uniform Resource Locator), an IP (Internet Protocol) address, and/or a mobile phone number.

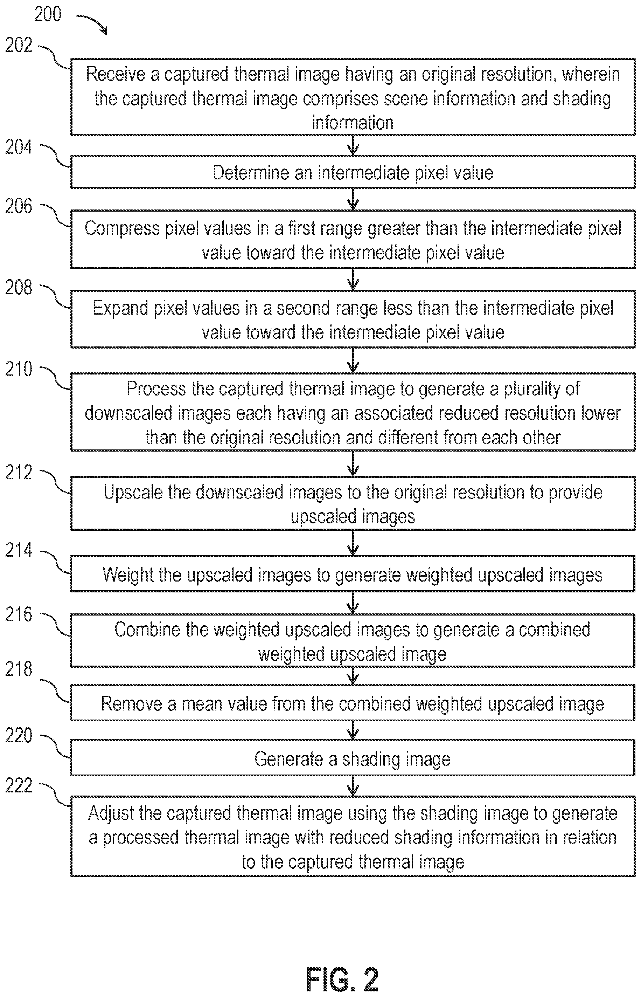

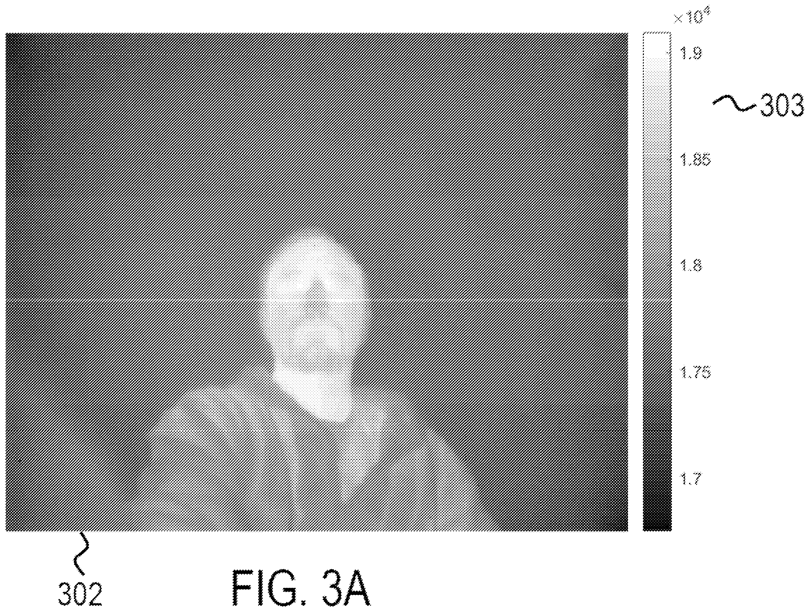

Fig. 2 illustrates a flow diagram of a process 200 to reduce shading in a thermal image thereby offering more shades of gray back to other portions of the scene content, bring out more contrast to an object of interest in the scene in accordance with an embodiment of the disclosure. The shade reduction system that performs process 200 operates on an original resolution image, such as, for example, a 512 pixels by 640 pixels 14-bit image. Thus, in block 202, logic device 110 receives a captured thermal image having an original resolution, wherein the captured thermal image comprises scene information and shading information. The captured thermal image comprises a plurality of pixels having associated pixel values distributed over an original dynamic range. Fig. 3A illustrates one example of thermal image 302 at an original resolution, the original pixel resolution varying between $1.92 \times 10^4$ to $1.66 \times 10^4$ as shown in scale 303. At block 204, logic device 110 determines an intermediate one of the pixel values, i.e. a midtone pixel value. The intermediate pixel value is a pixel value between the mean pixel value (i.e., an average of all the pixel values in the original resolution image) and a maximum (max) pixel value (i.e., a maximum pixel value of all the pixel values in the original resolution image). Logic device 110 determines the intermediate pixel value (the midtone pixel value) using Equation 1.

$$midtone = \frac{image\ mean + (maxmult-1)*image\ max}{maxmult} \tag{1}$$

In one embodiment, *maxmult* is a parameter used to choose the position between the mean pixel value (*image mean*) and the max pixel value (*image max*) of the original resolution image. A typical value for *maxmult* is, for example, 16.

Once the intermediate pixel value is determined, at block 206, logic device 110 adjusts down pixel values in the original resolution image by compressing pixel values in a first range that are greater than or equal to the intermediate pixel value toward the intermediate pixel value. Logic device 110 compresses (adjusts down ) the pixel values in a first range that are greater than or equal to the intermediate pixel value (midtone pixel value) using Equation 2.

$$zt(input \geq midtone) = \frac{zt(input \geq midtone) + (compressfac-1)*midtone}{compressfac} \tag{2}$$

where *zt* is the input pixel value that is greater than or equal to the intermediate pixel value and the *compressfac* is the factor used to compress pixel values, for example, 16.

At block 208, logic device 110 adjusts up pixel values in the original resolution image by expanding (e.g., stretching) pixel values in a second range that are less than the intermediate pixel value toward the intermediate pixel value. Logic device 110 expands (adjusts up) the pixel values in a second range that are less than the intermediate pixel value (midtone pixel value) using Equation 3.

$$zt(input < midtone) = \frac{zt(input < midtone) + (stretchfac-1)*midtone}{stretchfac} \tag{3}$$

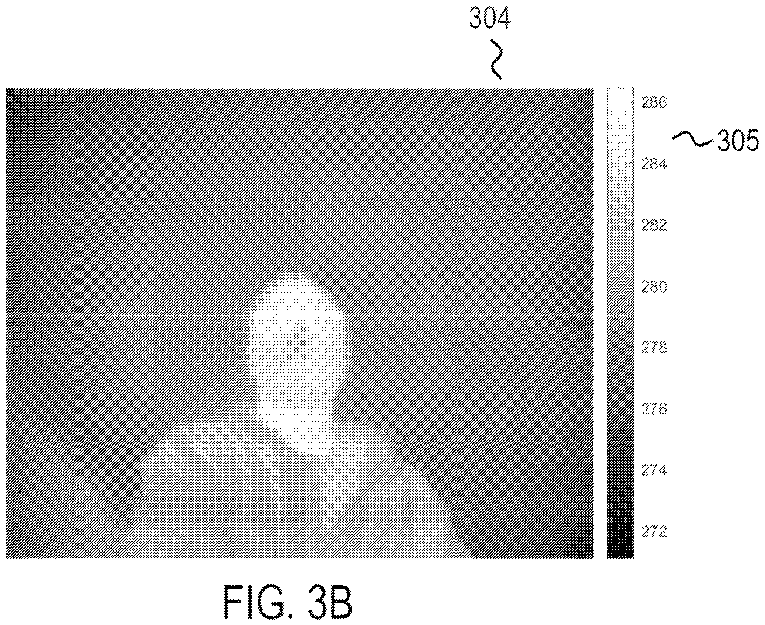

where zt is the input pixel value that is less than the intermediate pixel value and the *stretchfac* is the expansion factor used to expand pixel values, for example, 8. Figure 3B illustrates one example of original resolution image 304 with both pixel values in a first range that are greater than or equal to the intermediate pixel value adjusted down (compressed) and pixel values in a second range that are less than the intermediate pixel value adjusted up (expanded). As can be seen in Fig. 3B, the toned range is a combined dynamic range of the compressed pixel values and the expanded pixel values that varies between 27 1 and 286 as shown in scale 305.

At block 210, logic device 110 processes the captured thermal image to generate a plurality of down scaled images each having an associated reduced resolution lower than the original resolution and different from each other. In one embodiment, each of the downscaled images in the plurality of downscaled images exhibits reduced scene information in relation to the captured thermal image. For example, with the original resolution image being at, for example, a 512 pixels by 640 pixels resolution, logic device 110 downscales the original resolution image to a plurality of downscaled images each at a different second resolution that are a multiple of the original resolution image, for example, to 4 pixels by 5 pixels, 8 pixels by 10 pixels, 16 pixels by 20 pixels. Logic device 110 downscales the original resolution image utilizing a resize function, such as bicubic, bilinear interpolation, etc., and Equations 4, 5, and 6, which correspond to zi4 for the 4 pixels by 5 pixels resolution, zi8 for the 8 pixels by 10 pixels resolution, and zi for the 16 pixels by 20 pixels resolution.

$$zi4 = resize(input, [4x5]) \tag{4}$$

$$zi8 = resize(input, [8x10]) \tag{5}$$

$$zi = resize(input, [16x20]) \tag{6}$$

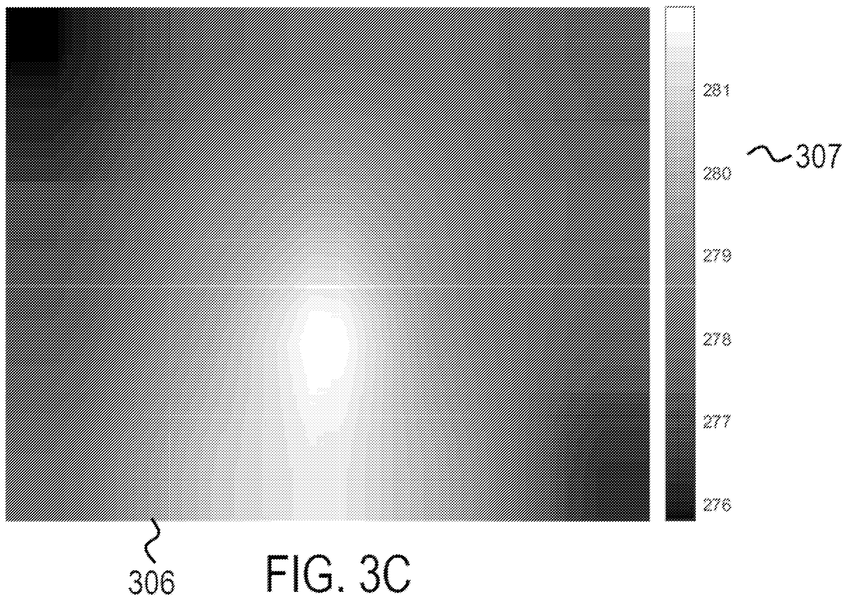

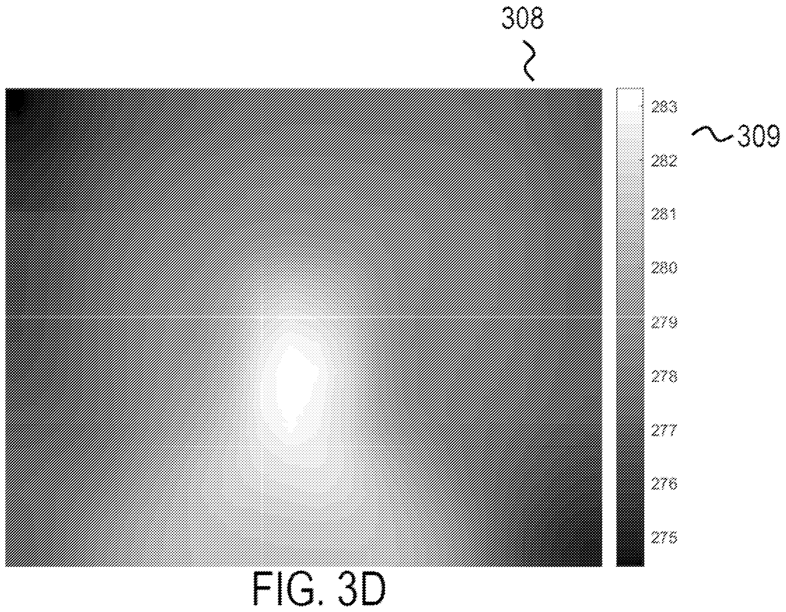

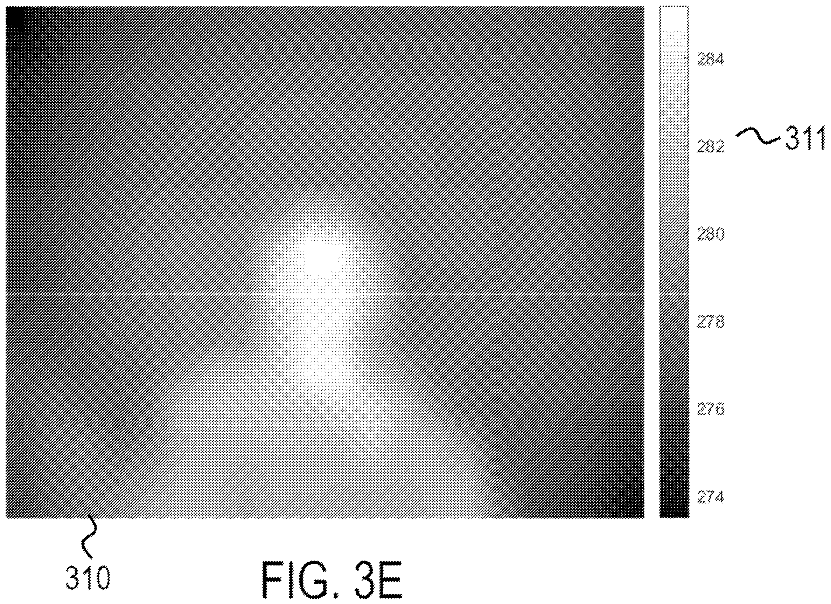

Fig. 3C illustrates one example of a downscaled 4 pixels by 5 pixels image 306 with a resolution pixel value varying from 276 to 282 as shown in scale 307, Fig. 3D illustrates one example of a downscaled 8 pixels by 10 pixels image 308 with a resolution pixel value varying from 275 to 283 as shown in scale 309, and Fig. 3E illustrates one example of a downscaled 16 pixels by 20 pixels image 310 with a resolution pixel value varying from 274 to 285 as shown in scale 311. Therefore, the reduced dynamic range causes the downscaled images to exhibit increased shading information.

At block 212, logic device 110 upscales the downscaled images to the original resolution to provide upscaled images. That is, logic device 110 forms a plurality of upscaled images utilizing a resize function and the plurality of downscaled images. Equations 7, 8, and 9, are the upscaling equations corresponding to zi4u for the 4 pixels by 5 pixels resolution, zi8u for the 8 pixels by 10 pixels resolution, and zi for the 16 pixels by 20 pixels resolution.

$$zi4u = resize(zi4, [512x640]) \qquad (7)$$

$$zi8u = resize(zi8, [512x640]) \qquad (8)$$

$$ziu = resize(zi, [512x640]) \qquad (9)$$

In order to generate a shading image using the upscaled images, which are based on the downscaled images, logic device 110 utilizes the upscaled images zi4u, zi8u, and ziu, to determine a shading value based on a weighted sum of different levels of upscaling of the plurality of upscaled image. To determine the shading value, at block 214, logic device 110 weights the upscaled images to generate weighted upscaled images and, at block 216, logic device 110 combines the weighted upscaled images to generate a combined (cumulative) weighted upscaled image utilizing Equation 10.

$$zicumulative = (P4 * zi4u + P8 * zi8u + P * ziu)/(P4 + P8 + P) \qquad (10)$$

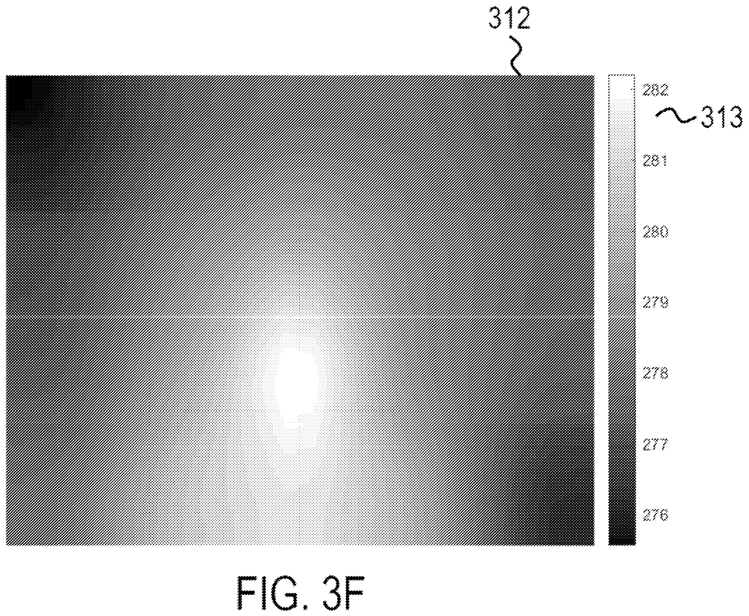

where P4, P8, and P are constants. Fig. 3F illustrates one example of a weighted sum image 312 with a resolution pixel value varying from 276 to 282 as shown in scale 313. Then, at block 218, logic device 110 removes a mean value from the combined (cumulative) weighted upscaled image to determine the shading value using Equation 11.

$$shading = zicumulative - mean(zicumulative) \qquad (11)$$

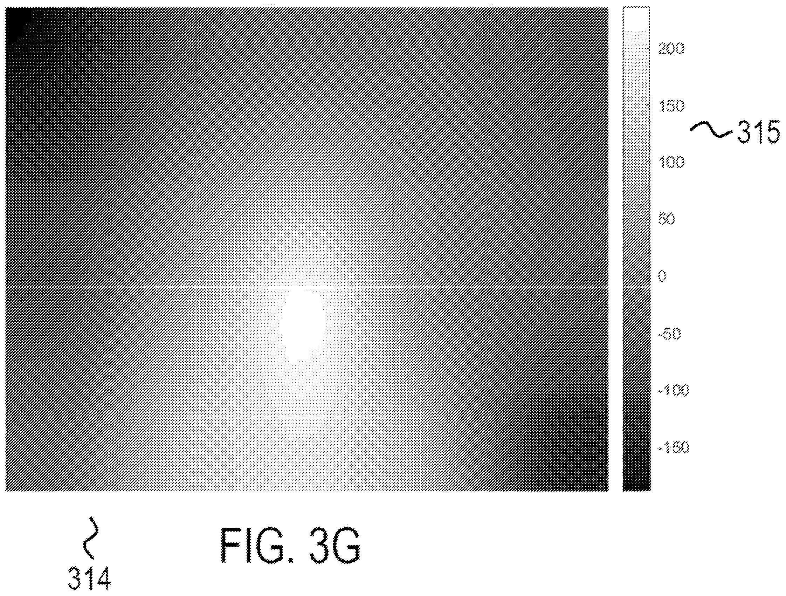

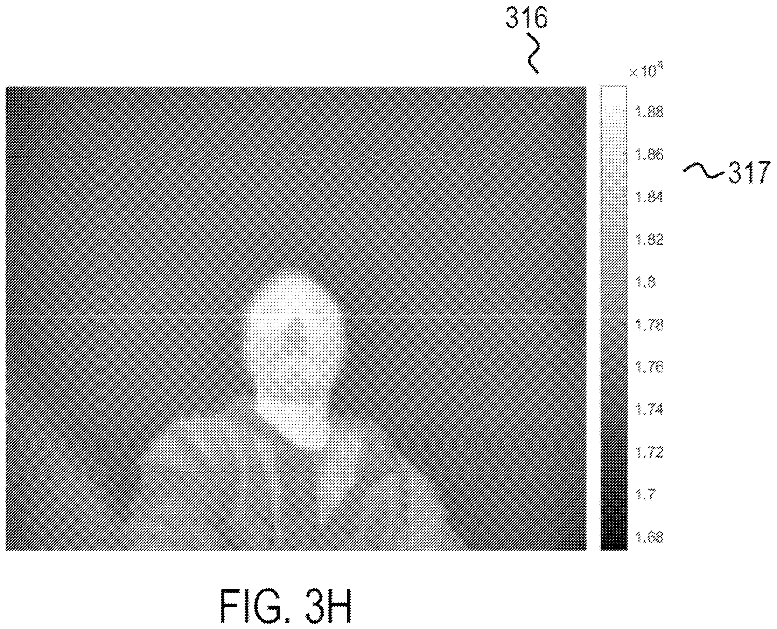

Thus, at block 220, logic device 110 utilizes the shading value to generate a shading image. Fig. 3G illustrates one example of a shading image 314 with a resolution pixel value varying from -180 to 230 as shown in scale 315. At block 222, logic device 110 adjusts the captured thermal image using the shading image to generate a processed thermal image with reduced shading information in relation to the captured thermal image. In one embodiment, to adjust the captured thermal image using the shading image, logic device 110 subtracts the shading value from the original resolution image to generate the processed thermal image. Figure 3H illustrates one example of a shading corrected image 316. As can be seen in Fig. 3H the resolution pixel value has changed to vary between $1.68 \times 10^4$ and $1.89 \times 10^4$ as shown in scale 317. Thus, the processed thermal image exhibits further reduced shading information

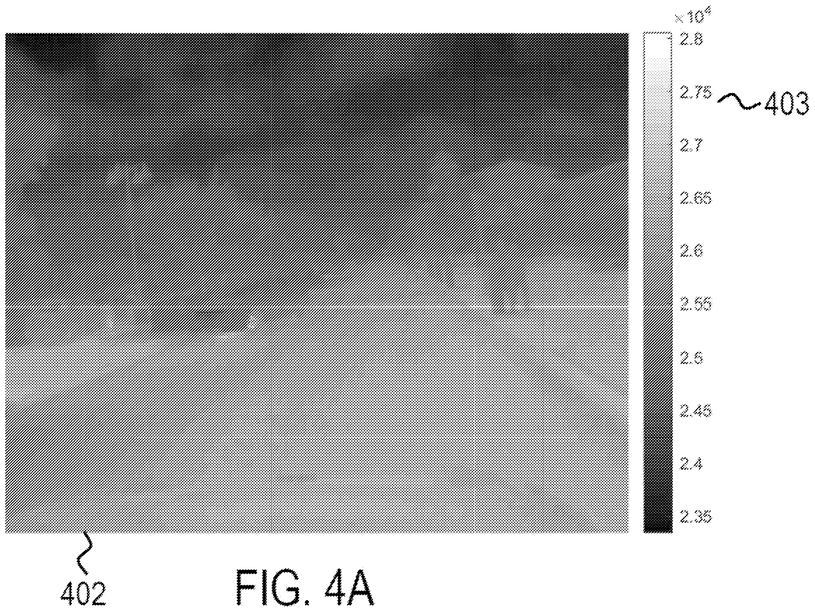

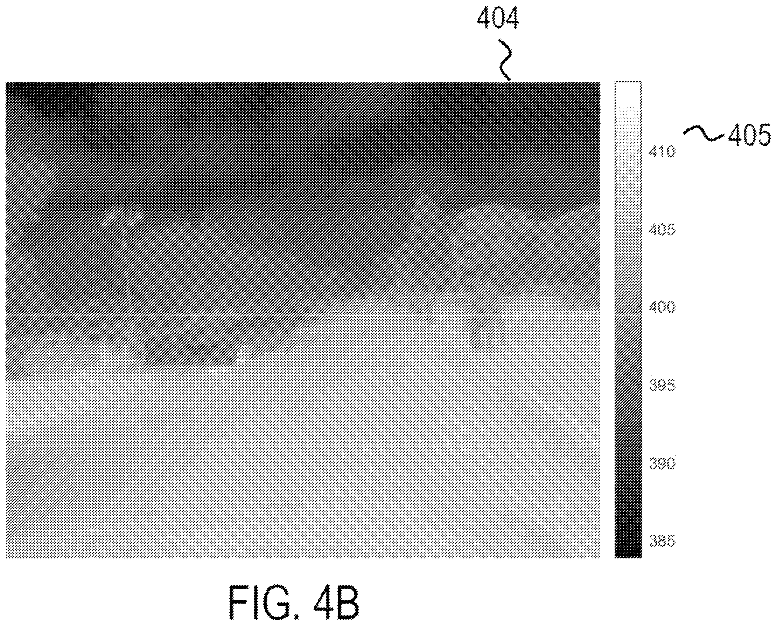

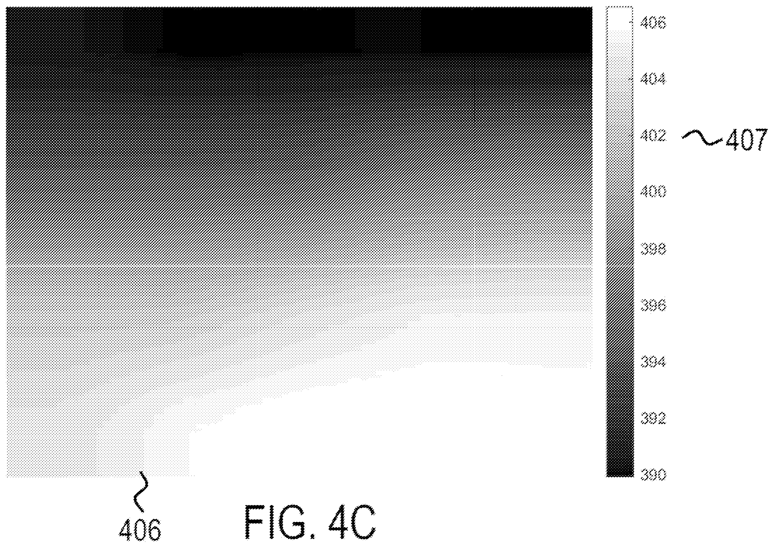

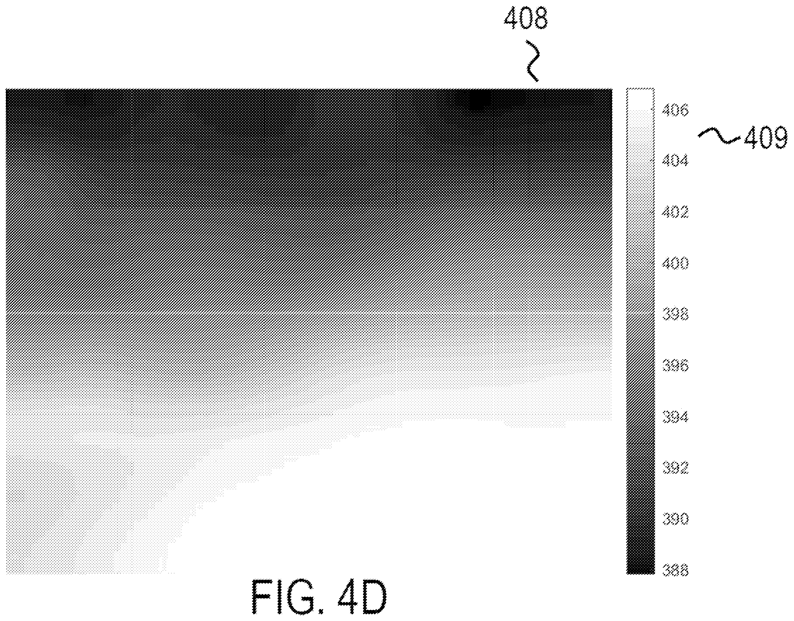

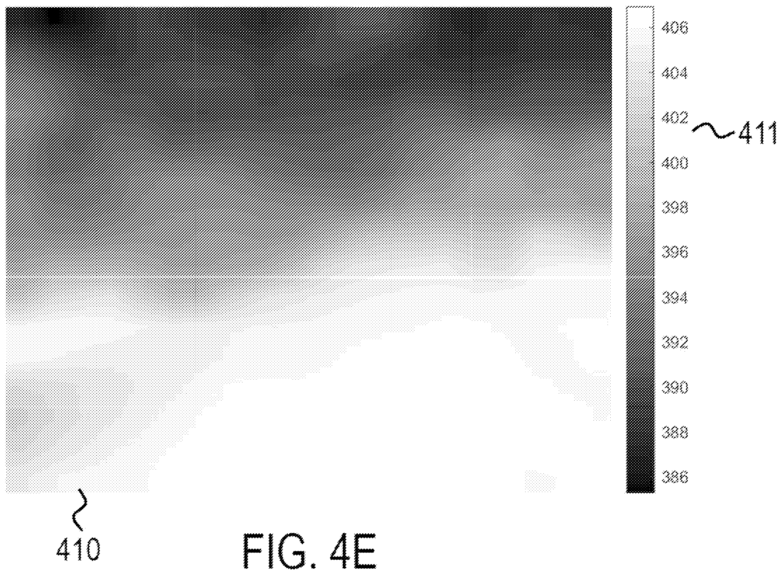

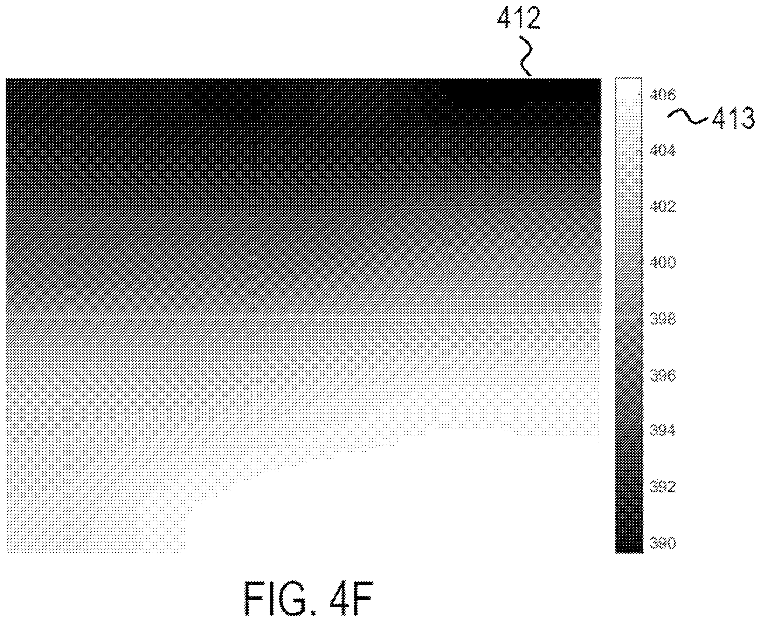

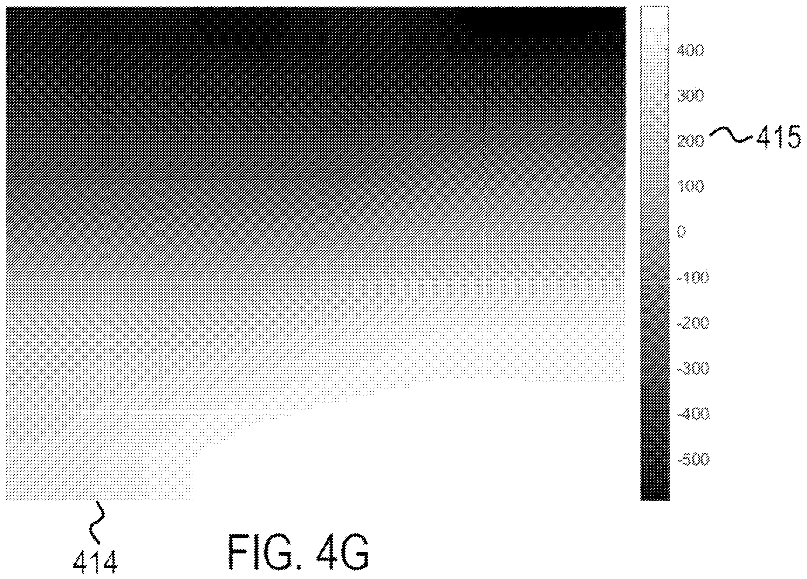

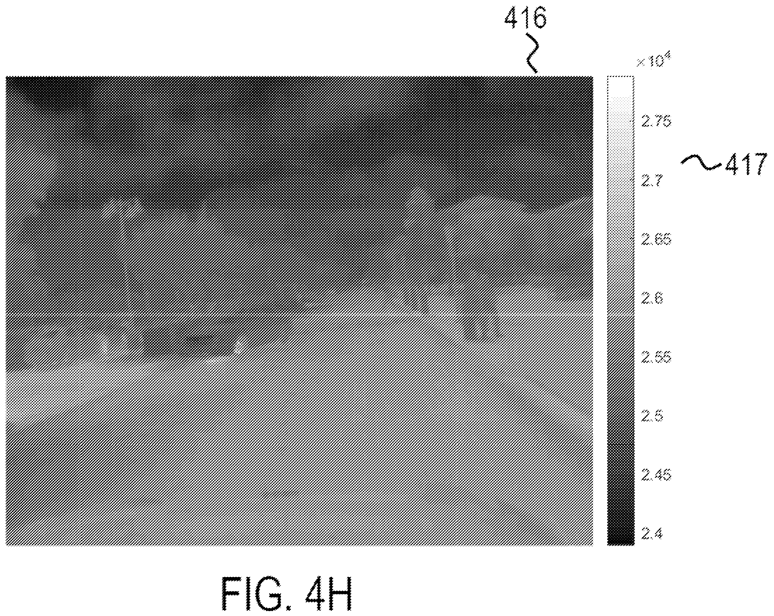

Figs. 4A-4H illustrate another example of the various changes to the original thermal image through the process described in Fig. 2 in accordance with embodiments of the disclosure. Fig. 4A illustrates one example of thermal image 402 at an original resolution, the original pixel resolution varying between $2.35 \times 10^4$ to $2.8 \times 10^4$ as shown in scale 403. Figure 4B illustrates one example of original resolution image 404 with both pixel values in a first range that are greater than or equal to the intermediate pixel value adjusted down (compressed) and pixel values in a second range that are less than the intermediate pixel value adjusted up (expanded). As can be seen in Fig. 4B, the toned range is a combined dynamic range of the compressed pixel values and the expanded pixel values that varies between 385 and 415 as shown in scale 405. Fig. 4C illustrates one example of a downscaled 4 pixels by 5 pixels image 406 with a resolution pixel value varying from 390 to 406 as shown in scale 407, Fig. 3D illustrates one example of a downscaled 8 pixels by 10 pixels image 408 with a resolution pixel value varying from 388 to 407 as shown in scale 409, and Fig. 4E illustrates one example of a downscaled 16 pixels by 20 pixels image 410 with a resolution pixel value varying from 386 to 407 as shown in scale 411. Fig. 4F illustrates one example of a weighted sum image 412 with a resolution pixel value varying from 390 to 407 as shown in scale 413. Fig. 4G illustrates one example of a shading image 414 with a resolution pixel value varying from -600 to 500 as shown in scale 415. Figure 4H illustrates one example of a shading corrected image 416. As can be seen in Fig. 4H the resolution pixel value has changed to vary between $2.4 \times 10^4$ and $2.8 \times 10^4$ as shown in scale 417.

Where applicable, various embodiments provided by the present disclosure can be implemented using hardware, software, or combinations of hardware and software. Also, where applicable, the various hardware components and/or software components set forth herein can be combined into composite components comprising software, hardware, and/or both. Where applicable, the various hardware components and/or software components set forth herein can be separated into sub-components comprising software, hardware, or both. In addition, where applicable, it is contemplated that software components can be implemented as hardware components, and vice versa.

Software in accordance with the present disclosure, such as non-transitory instructions, program code, and/or data, can be stored on one or more non-transitory machine-readable mediums. It is also contemplated that software identified herein can be implemented using one or more general purpose or specific purpose computers and/or computer systems, networked and/or otherwise. Where applicable, the ordering of various steps described herein can be changed, combined into composite steps, and/or separated into sub-steps to provide features described herein.

The foregoing description is not intended to limit the present disclosure to the precise forms or particular fields of use disclosed. Embodiments described above illustrate but do not limit the invention. It is contemplated that various alternate embodiments and/or modifications to the present invention, whether explicitly described or implied herein, are possible in light of the disclosure. Accordingly, the scope of the invention is defined only by the following claims.

**Claims**

1. A method (200) comprising:

    receiving (202) a captured thermal image (302) having an original resolution, wherein the captured thermal image comprises a plurality of pixels having associated pixel values distributed over an original dynamic range, and wherein the captured thermal image includes scene information about at least one object of interest emitting and/or absorbing thermal radiation (192) within a scene (170) and shading information obstructing a detail associated with the object of interest;
    adjusting the pixel values to exhibit a reduced dynamic range;
    after adjusting the pixel values, processing (210) the captured thermal image to generate a plurality of downscaled images (306, 308, 310) each having an associated reduced resolution lower than the original resolution and different from each other, wherein the downscaled images exhibit reduced scene information about the at least one object of interest in relation to the captured thermal image;
    generating (220) a shading image using the downscaled images; and
    adjusting (222) the captured thermal image using the shading image to generate a processed thermal image (316) with reduced shading information in relation to the captured thermal image.

2. The method of claim 1, wherein the generating the shading image comprises:

    upscaling (212) the downscaled images to the original resolution to provide upscaled images;
    weighting (214) the upscaled images to generate weighted upscaled images;
    combining (216) the weighted upscaled images to generate a combined weighted upscaled image; and
    removing (218) a mean value from the combined weighted upscaled image.

3. The method of claim 1, wherein the plurality of downscaled images comprises a first downscaled image having a first reduced resolution, a second downscaled image having a second reduced resolution, and a third downscaled image having a third reduced resolution, wherein the first, second, and third reduced resolutions are less than the original resolution and are different from each other.

4. The method of claim **1,** wherein the adjusting the pixel values comprises:

    selecting (204) an intermediate one of the pixel values;
    compressing (206) the pixel values greater than the intermediate pixel value toward the intermediate pixel value;
    expanding (208) the pixel values less than the intermediate pixel value toward the intermediate pixel value; and
    wherein the reduced dynamic range is a combined dynamic range of the compressed pixel values and the expanded pixel values.

5. The method of claim 4, wherein the intermediate pixel value is between a mean of the pixel values and a maximum of the pixel values.

6. The method of claim 1, wherein the reduced dynamic range causes the downscaled images to exhibit increased shading information and the processed thermal image to exhibit further reduced shading information.

7. A system (100) comprising:

    a memory component (120) storing machine-executable instructions; and
    a logic device (110) configured to execute the instructions to cause the system to:

        receive (202) a captured thermal image (302) having an original resolution, wherein the captured thermal image comprises a plurality of pixels having associated pixel values distributed over an original dynamic range, and wherein the captured thermal image includes scene information about at least one object of interest emitting and/or absorbing thermal radiation (192) within a scene (170) and shading information obstructing a detail associated with the object of interest;

adjust the pixel values to exhibit a reduced dynamic range;

after adjusting the pixel values, process (210) the captured thermal image to generate a plurality of downscaled images (306, 308, 310) each having an associated reduced resolution lower than the original resolution and different from each other, wherein the downscaled images exhibit reduced scene information about the at least one object of interest in relation to the captured thermal image;

generate (220) a shading image (314) using the downscaled images; and

adjust (222) the captured thermal image using the shading image to generate a processed thermal image (316) with reduced shading information in relation to the captured thermal image.

8. The system of claim 7, wherein the adjusting the captured thermal image comprises subtracting the shading image from the captured thermal image.

9. The system of claim 7, wherein the logic device is further configured to execute the instructions to cause the system to upscale (212) the downscaled images to the original resolution to provide upscaled images.

10. The system of claim 9, wherein the logic device is further configured to execute the instructions to generate the shading image by:

weighting (214) the upscaled images to generate weighted upscaled images;

combining (216) the weighted upscaled images to generate a combined weighted upscaled image; and

removing (218) a mean value from the combined weighted upscaled image.

11. The system of claim 7, wherein the original resolution is a multiple of the reduced resolutions.

12. The system of claim 7, wherein the plurality of downscaled images comprises a first downscaled image having a first reduced resolution, a second downscaled image having a second reduced resolution, and a third downscaled image having a third reduced resolution, wherein the first, second, and third reduced resolutions are less than the original resolution and are different from each other.

13. The system of claim 7, wherein the logic device is further configured to execute the instructions to adjust the pixel values by:

selecting (204) an intermediate one of the pixel values;

compressing (206) the pixel values greater than the intermediate pixel value toward the intermediate pixel value;

expanding (208) the pixel values less than the intermediate pixel value toward the intermediate pixel value; and

wherein the reduced dynamic range is a combined dynamic range of the compressed pixel values and the expanded pixel values.

14. The system of claim 13, wherein the intermediate pixel value is between a mean of the pixel values and a maximum of the pixel values.

15. The system of claim 7, wherein the reduced dynamic range causes the downscaled images to exhibit increased shading information and the processed thermal image to exhibit further reduced shading information.

**Patentansprüche**

1. Ein Verfahren (200), das Folgendes beinhaltet:

Empfangen (202) eines erfassten Wärmebildes (302), das eine ursprüngliche Auflösung aufweist, wobei das erfasste Wärmebild eine Vielzahl von Pixeln mit assoziierten Pixelwerten, die über einen ursprünglichen dynamischen Bereich verteilt sind, aufweist und wobei das erfasste Wärmebild Schauplatzinformationen über mindestens ein Objekt von Interesse, das Wärmestrahlung (192) innerhalb eines Schauplatzes (170) abstrahlt und/oder absorbiert, und Schattierungsinformationen, die ein mit dem Objekt von Interesse assoziiertes Detail überdecken, umfasst;

Anpassen der Pixelwerte, um einen verringerten dynamischen Bereich darzustellen;

nach dem Anpassen der Pixelwerte Bearbeiten (210) des erfassten Wärmebildes, um eine Vielzahl vergröberter Bilder (306, 308, 310) zu erzeugen, die jeweils eine assoziierte verringerte Auflösung, die niedriger als die ursprüngliche Auflösung ist,
aufweisen und sich voneinander unterscheiden, wobei die vergröberten Bilder, bezogen auf das erfasste Wärmebild, verringerte Schauplatzinformationen um das mindestens eine Objekt von Interesse herum darstellen;
Erzeugen (220) eines Schattierungsbildes unter Verwendung der vergröberten Bilder; und
Anpassen (222) des erfassten Wärmebildes unter Verwendung des Schattierungsbildes, um ein bearbeitetes Wärmebild (316) mit, bezogen auf das erfasste Wärmebild, verringerten Schattierungsinformationen zu erzeugen.

2. Verfahren gemäß Anspruch 1, wobei das Erzeugen des Schattierungsbildes Folgendes beinhaltet:

Verfeinern (212) der vergröberten Bilder auf die ursprüngliche Auflösung, um verfeinerte Bilder bereitzustellen;
Gewichten (214) der verfeinerten Bilder, um gewichtete verfeinerte Bilder zu erzeugen; Kombinieren (216) der gewichteten verfeinerten Bilder, um ein kombiniertes gewichtetes verfeinertes Bild zu erzeugen; und
Entfernen (218) eines Mittelwertes aus dem kombinierten gewichteten verfeinerten Bild.

3. Verfahren gemäß Anspruch 1, wobei die Vielzahl vergröberter Bilder ein erstes vergröbertes Bild mit einer ersten verringerten Auflösung, ein zweites vergröbertes Bild mit einer zweiten verringerten Auflösung und ein drittes vergröbertes Bild mit einer dritten verringerten Auflösung beinhaltet, wobei die erste, zweite und dritte verringerte Auflösung niedriger als die ursprüngliche Auflösung sind und sich voneinander unterscheiden.

4. Verfahren gemäß Anspruch 1, wobei das Anpassen der Pixelwerte Folgendes beinhaltet:

Auswählen (204) eines intermediären der Pixelwerte;
Komprimieren (206) der Pixelwerte, die größer als der intermediäre Pixelwert sind, hin zu dem intermediären Pixelwert;
Vergrößern (208) der Pixelwerte, die niedriger als der intermediäre Pixelwert sind, hin zu dem intermediären Pixelwert; und
wobei der verringerte dynamische Bereich ein kombinierter dynamischer Bereich der komprimierten Pixelwerte und der vergrößerten Pixelwerte ist.

5. Verfahren gemäß Anspruch 4, wobei der intermediäre Pixelwert zwischen einem Mittel der Pixelwerte und einem Maximum der Pixelwerte liegt.

6. Verfahren gemäß Anspruch 1, wobei der verringerte dynamische Bereich bewirkt, dass die vergröberten Bilder erhöhte Schattierungsinformationen darstellen und das bearbeitete Wärmebild weiter verringerte Schattierungsinformationen darstellt.

7. Ein System (100), das Folgendes beinhaltet:

eine Arbeitsspeicherkomponente (120), auf der maschinenausführbare Anweisungen gespeichert sind; und
eine Logikvorrichtung (110), die dazu konfiguriert ist, die Anweisungen auszuführen, um zu bewirken, dass das System Folgendes tut:

Empfangen (202) eines erfassten Wärmebildes (302), das eine ursprüngliche Auflösung aufweist, wobei das erfasste Wärmebild eine Vielzahl von Pixeln mit assoziierten Pixelwerten, die über einen ursprünglichen dynamischen Bereich verteilt sind, aufweist und wobei das erfasste Wärmebild Schauplatzinformationen über mindestens ein Objekt von Interesse, das Wärmestrahlung (192) innerhalb eines Schauplatzes (170) abstrahlt und/oder absorbiert, und Schattierungsinformationen, die ein mit dem Objekt von Interesse assoziiertes Detail überdecken, umfasst;
Anpassen der Pixelwerte, um einen verringerten dynamischen Bereich darzustellen;
nach dem Anpassen der Pixelwerte Bearbeiten (210) des erfassten Wärmebildes, um eine Vielzahl vergröberter Bilder (306, 308, 310) zu erzeugen, die jeweils eine assoziierte verringerte Auflösung, die niedriger als die ursprüngliche Auflösung ist, aufweisen und sich voneinander unterscheiden, wobei die vergröberten Bilder, bezogen auf das erfasste Wärmebild, verringerte Schauplatzinformationen um das mindestens eine Objekt von Interesse herum darstellen;
Erzeugen (220) eines Schattierungsbildes (314) unter Verwendung der vergröberten Bilder; und
Anpassen (222) des erfassten Wärmebildes unter Verwendung des Schattierungsbildes, um ein bearbeitetes Wärmebild (316) mit, bezogen auf das erfasste Wärmebild, verringerten Schattierungsinformationen zu erzeugen.

8. System gemäß Anspruch 7, wobei das Anpassen des erfassten Wärmebildes das Subtrahieren des Schattierungsbildes von dem erfassten Wärmebild beinhaltet.

9. System gemäß Anspruch 7, wobei die Logikvorrichtung ferner dazu konfiguriert ist, die Anweisungen auszuführen, um zu bewirken, dass das System die vergröberten Bilder auf die ursprüngliche Auflösung verfeinert (212), um verfeinerte Bilder bereitzustellen.

10. System gemäß Anspruch 9, wobei die Logikvorrichtung ferner dazu konfiguriert ist, die Anweisungen auszuführen, um das Schattierungsbild durch Folgendes zu erzeugen:

Gewichten (214) der verfeinerten Bilder, um gewichtete verfeinerte Bilder zu erzeugen; Kombinieren (216) der gewichteten verfeinerten Bilder, um ein kombiniertes gewichtetes verfeinertes Bild zu erzeugen; und Entfernen (218) eines Mittelwertes aus dem kombinierten gewichteten verfeinerten Bild.

11. System gemäß Anspruch 7, wobei die ursprüngliche Auflösung ein Vielfaches der verringerten Auflösungen ist.

12. System gemäß Anspruch 7, wobei die Vielzahl vergröberter Bilder ein erstes vergröbertes Bild mit einer ersten verringerten Auflösung, ein zweites vergröbertes Bild mit einer zweiten verringerten Auflösung und ein drittes vergröbertes Bild mit einer dritten verringerten Auflösung beinhaltet, wobei die erste, zweite und dritte verringerte Auflösung niedriger als die ursprüngliche Auflösung sind und sich voneinander unterscheiden.

13. System gemäß Anspruch 7, wobei die Logikvorrichtung ferner dazu konfiguriert ist, die Anweisungen auszuführen, um die Pixelwerte durch Folgendes anzupassen:

Auswählen (204) eines intermediären der Pixelwerte;
Komprimieren (206) der Pixelwerte, die größer als der intermediäre Pixelwert sind, hin zu dem intermediären Pixelwert;
Vergrößern (208) der Pixelwerte, die niedriger als der intermediäre Pixelwert sind, hin zu dem intermediären Pixelwert; und
wobei der verringerte dynamische Bereich ein kombinierter dynamischer Bereich der komprimierten Pixelwerte und der vergrößerten Pixelwerte ist.

14. System gemäß Anspruch 13, wobei der intermediäre Pixelwert zwischen einem Mittel der Pixelwerte und einem Maximum der Pixelwerte liegt.

15. System gemäß Anspruch 7, wobei der verringerte dynamische Bereich bewirkt, dass die vergröberten Bilder erhöhte Schattierungsinformationen darstellen und das bearbeitete Wärmebild weiter verringerte Schattierungsinformationen darstellt.

## Revendications

1. Un procédé (200) comprenant :

le fait de recevoir (202) une image thermique capturée (302) ayant une résolution d'origine, dans lequel l'image thermique capturée comprend une pluralité de pixels ayant des valeurs de pixel associées distribuées sur une gamme dynamique d'origine,
et dans lequel l'image thermique capturée inclut des informations de scène concernant au moins un objet d'intérêt émettant et/ou absorbant un rayonnement thermique (192) au sein d'une scène (170) et des informations d'ombrage cachant un détail associé à l'objet d'intérêt ;
le fait d'ajuster les valeurs de pixel afin de présenter une gamme dynamique réduite ;
après avoir ajusté les valeurs de pixel, le fait de traiter (210) l'image thermique capturée afin de générer une pluralité d'images à échelle réduite (306, 308, 310), chacune ayant une résolution réduite associée inférieure à la résolution d'origine et différente l'une de l'autre, dans lequel les images à échelle réduite présentent des informations de scène réduites concernant l'au moins un objet d'intérêt en rapport avec l'image thermique capturée ;

le fait de générer (220) une image d'ombrage à l'aide des images à échelle réduite ; et le fait d'ajuster (222) l'image thermique capturée à l'aide de l'image d'ombrage afin de générer une image thermique traitée (316) avec des informations d'ombrage réduites en rapport avec l'image thermique capturée.

2. Le procédé de la revendication 1, dans lequel le fait de générer l'image d'ombrage comprend :

le fait d'augmenter l'échelle (212) des images à échelle réduite par rapport à la résolution d'origine afin de fournir des images à échelle augmentée ;

le fait de pondérer (214) les images à échelle augmentée afin de générer des images à échelle augmentée pondérées ;

le fait de combiner (216) les images à échelle augmentée pondérées afin de générer une image à échelle augmentée pondérée combinée ; et

le fait de retirer (218) une valeur moyenne de l'image à échelle augmentée pondérée combinée.

3. Le procédé de la revendication 1, dans lequel la pluralité d'images à échelle réduite comprend une première image à échelle réduite ayant une première résolution réduite, une deuxième image à échelle réduite ayant une deuxième résolution réduite, et une troisième image à échelle réduite ayant une troisième résolution réduite, dans lequel les première, deuxième, et troisième résolutions réduites sont inférieures à la résolution d'origine et sont différentes les unes des autres.

4. Le procédé de la revendication 1, dans lequel le fait d'ajuster les valeurs de pixel comprend :

le fait de sélectionner (204) une valeur intermédiaire parmi les valeurs de pixel ;

le fait de compresser (206) les valeurs de pixel supérieures à la valeur de pixel intermédiaire vers la valeur de pixel intermédiaire ;

le fait d'agrandir (208) les valeurs de pixel inférieures à la valeur de pixel intermédiaire vers la valeur de pixel intermédiaire ; et

dans lequel la gamme dynamique réduite est une gamme dynamique combinée des valeurs de pixel compressées et des valeurs de pixel agrandies.

5. Le procédé de la revendication 4, dans lequel la valeur de pixel intermédiaire est comprise entre une moyenne des valeurs de pixel et un maximum des valeurs de pixel.

6. Le procédé de la revendication 1, dans lequel la gamme dynamique réduite amène les images à échelle réduite à présenter des informations d'ombrage accrues et l'image thermique traitée à présenter des informations d'ombrage davantage réduites.

7. Un système (100) comprenant :

un composant mémoire (120) stockant des instructions exécutables par machine ; et

un dispositif logique (110) configuré pour exécuter les instructions afin d'amener le système à :

recevoir (202) une image thermique capturée (302) ayant une résolution d'origine, dans lequel l'image thermique capturée comprend une pluralité de pixels ayant des valeurs de pixel associées distribuées sur une gamme dynamique d'origine, et dans lequel l'image thermique capturée inclut des informations de scène concernant au moins un objet d'intérêt émettant et/ou absorbant un rayonnement thermique (192) au sein d'une scène (170) et des informations d'ombrage cachant un détail associé à l'objet d'intérêt ;

ajuster les valeurs de pixel afin de présenter une gamme dynamique réduite ; après avoir ajusté les valeurs de pixel, traiter (210) l'image thermique capturée afin de générer une pluralité d'images à échelle réduite (306, 308, 310), chacune ayant une résolution réduite associée inférieure à la résolution d'origine et différente l'une de l'autre, dans lequel les images à échelle réduite présentent des informations de scène réduites concernant l'au moins un objet d'intérêt en rapport avec l'image thermique capturée ;

générer (220) une image d'ombrage (314) à l'aide des images à échelle réduite ; et

ajuster (222) l'image thermique capturée à l'aide de l'image d'ombrage afin de générer une image thermique traitée (316) avec des informations d'ombrage réduites en rapport avec l'image thermique capturée.

8. Le système de la revendication 7, dans lequel le fait d'ajuster l'image thermique capturée comprend le fait de soustraire l'image d'ombrage de l'image thermique capturée.

9. Le système de la revendication 7, dans lequel le dispositif logique est en outre configuré pour exécuter les instructions afin d'amener le système à augmenter l'échelle (212) des images à échelle réduite par rapport à la résolution d'origine afin de fournir des images à échelle augmentée.

10. Le système de la revendication 9, dans lequel le dispositif logique est en outre configuré pour exécuter les instructions afin de générer l'image d'ombrage par :

le fait de pondérer (214) les images à échelle augmentée afin de générer des images à échelle augmentée pondérées ;
le fait de combiner (216) les images à échelle augmentée pondérées afin de générer une image à échelle augmentée pondérée combinée ; et
le fait de retirer (218) une valeur moyenne de l'image à échelle augmentée pondérée combinée.

11. Le système de la revendication 7, dans lequel la résolution d'origine est un multiple des résolutions réduites.

12. Le système de la revendication 7, dans lequel la pluralité d'images à échelle réduite comprend une première image à échelle réduite ayant une première résolution réduite, une deuxième image à échelle réduite ayant une deuxième résolution réduite, et une troisième image à échelle réduite ayant une troisième résolution réduite, dans lequel les première, deuxième, et troisième résolutions réduites sont inférieures à la résolution d'origine et sont différentes les unes des autres.

13. Le système de la revendication 7, dans lequel le dispositif logique est en outre configuré pour exécuter les instructions afin d'ajuster les valeurs de pixel par :

le fait de sélectionner (204) une valeur intermédiaire parmi les valeurs de pixel ; le fait de compresser (206) les valeurs de pixel supérieures à la valeur de pixel intermédiaire vers la valeur de pixel intermédiaire ;
le fait d'agrandir (208) les valeurs de pixel inférieures à la valeur de pixel intermédiaire vers la valeur de pixel intermédiaire ; et
dans lequel la gamme dynamique réduite est une gamme dynamique combinée des valeurs de pixel compressées et des valeurs de pixel agrandies.

14. Le système de la revendication 13, dans lequel la valeur de pixel intermédiaire est comprise entre une moyenne des valeurs de pixel et un maximum des valeurs de pixel.

15. Le système de la revendication 7, dans lequel la gamme dynamique réduite amène les images à échelle réduite à présenter des informations d'ombrage accrues et l'image thermique traitée à présenter des informations d'ombrage davantage réduites.

FIG. 1

200

202 — Receive a captured thermal image having an original resolution, wherein the captured thermal image comprises scene information and shading information

204 — Determine an intermediate pixel value

206 — Compress pixel values in a first range greater than the intermediate pixel value toward the intermediate pixel value

208 — Expand pixel values in a second range less than the intermediate pixel value toward the intermediate pixel value

210 — Process the captured thermal image to generate a plurality of downscaled images each having an associated reduced resolution lower than the original resolution and different from each other

212 — Upscale the downscaled images to the original resolution to provide upscaled images

214 — Weight the upscaled images to generate weighted upscaled images

216 — Combine the weighted upscaled images to generate a combined weighted upscaled image

218 — Remove a mean value from the combined weighted upscaled image

220 — Generate a shading image

222 — Adjust the captured thermal image using the shading image to generate a processed thermal image with reduced shading information in relation to the captured thermal image

FIG. 2

FIG. 3A

FIG. 3B

FIG. 3C

306

307

276
277
278
279
280
281

EP 4 457 749 B1

309

308

283
282
281
280
279
278
277
276
275

FIG. 3D

FIG. 3E

FIG. 3F

FIG. 3G

EP 4 457 749 B1

FIG. 3H

FIG. 4A

FIG. 4B

FIG. 4C

FIG. 4D

EP 4 457 749 B1

FIG. 4E

EP 4 457 749 B1

FIG. 4F

FIG. 4G

EP 4 457 749 B1

FIG. 4H

**EP 4 457 749 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0028730 A